# EUROPÄISCHE PATENTSCHRIFT

(11) **EP 0 925 436 B1**
(45) Veröffentlichungstag und Bekanntmachung des Hinweises auf die Patenterteilung: **27.03.2002**
(21) Anmeldenummer: 97919043.6
(22) Anmeldetag: 08.09.1997
(51) Int. Cl.: F02M 25/028

(54) **ANTRIEBSEINRICHTUNG UND VERFAHREN ZUR REDUKTION DER MENGE NOx IN DEN ABGASEN EINES VERBRENNUNGSMOTORS**
DRIVE ARRANGEMENT AND METHOD OF REDUCING THE AMOUNT OF NOx IN THE EXHAUST GASES FROM AN INTERNAL COMBUSTION ENGINE
DISPOSITIF MOTEUR ET PROCEDE PERMETTANT DE REDUIRE LA QUANTITE DE NOx PRESENTE DANS LES GAZ D'ECHAPPEMENT D'UN MOTEUR A COMBUSTION INTERNE

(30) Priorität: 09.09.1996 CH 220996
(43) Veröffentlichungstag der Anmeldung: 30.06.1999
(73) Patentinhaber: Lars Collin Consult AB, S-43139 Mölndal (SE)
(72) Erfinder: COLLIN, Lars, Thorbjörn, S-431 39 Mölndal (SE)
(74) Vertreter: Hepp, Dieter
(86) Internationale Anmeldenummer: EP9704865
(87) Internationale Veröffentlichungsnummer: WO9810185

(56) Entgegenhaltungen:
- DE-C- 647 425
- FR-A- 2 529 950
- GB-A- 528 207
- GB-A- 1 031 295
- GB-A- 2 259 326
- US-A- 3 862 819
- US-A- 4 459 943
- US-A- 4 630 642
- US-A- 4 632 067

## Beschreibung

Die Erfindung betrifft eine Antriebseinrichtung nach dem Oberbegriff des Patentanspruchs 1 und ein Verfahren zur Reduktion der Menge NOₓ in den Abgasen eines Verbrennungsmotors nach dem Oberbegriff des Patentanspruchs 7.

Es ist allgemein bekannt, dass die Produktion von NOₓ in den Abgasen durch Zufuhr von Wasser in die Ansaugluft oder auch in den Treibstoff reduziert werden kann. Aus der GB-A-2-259-326 ist ausserdem eine Vorrichtung bekannt, welche ein Wassereinspritzsystem für aufgeladene Motoren mit einem Ladeluftkühler beschreibt. Zwischen dem Kompressor und dem Motor ist parallel zum Ladeluftkühler eine Druckleitung vorgesehen, die zu einem Wassertank führt, und von welcher eine Druckleitung über eine Düse in den Ausgangskanal hinter dem Ladeluftkühler mündet. Hinter diesem Anschluss ist eine Drosselklappe im mit dem Motor verbundenen Ausgangskanal vorgesehen. Das System wurde bei einem Vergasermotor und bei einem Brennstoffeinspritzmotor eingesetzt.

Mit diesem System lässt sich Wasser beispielsweise in einen Ottomotor einspritzen.

Die Höhe der Verringerung von NOₓ liegt normalerweise in derselben Grössenordnung wie das Verhältnis zwischen dem beigefügten Wasser und der Menge Brennstoff. Da die Brennstoffmenge jedoch rasch variieren kann aufgrund beispielsweise der Fahrweise infolge unterschiedlicher Übersetzung und Belastung, muss auch die eingespritzte Menge Wasser sich schnell der Treibstoffmenge anpassen. Insbesondere während des Startens und bei niedriger Belastung kann eine zu grosse Menge Wasser die Motorleistung stark beeinträchtigen.

Der grösste Anteil an NOₓ wird bei maximalem Drehmoment bei Drehzahlen zwischen 55% und 85% der maximalen Drehzahl erzeugt. Bei diesen Drehzahlen muss eine ausreichende Menge Wasser in die Ansaugluft eingegeben werden. Der Grund für die Reduktion des NOₓ ist einerseits die reduzierte Temperatur während des Arbeitsprozesses (durch die Phasenumwandlung des Wassers in Dampf wird dem System Energie entzogen, was das System kühlt und die Reaktionsgeschwindigkeit reduziert) und andererseits die verlangsamte Reaktionsgeschwindigkeit bei der Erzeugung von NOₓ unter Einfluss von Wasserdampf.

Bei Ottomotoren mit einem Katalysator, welche eine Lambdasonde verwenden, wird durch die Sonde das stoechiometrische Verhältnis zwischen Luft und Treibstoff kontrolliert. Wenn die Ansaugluft gleichmässig mit Wasser angereichert wird, folgt die Wassermenge automatisch der konsumierten Treibstoffmenge.

Ein Dieselmotor muss mit einem gewissen Überschuss an Ansaugluft arbeiten, weil der in die Brennkammer eingespritzte Treibstoff sich in der kurzen, zur Verfügung stehenden Zeit nicht gleichmässig im Brennraum verteilen kann.

Da dies bei Dieselmotoren nicht der Fall ist, soll die eingespritzte Wassermenge geregelt werden.

Aus verschiedenen Publikationen (beispielsweise FR-2,529,950, US-4,630,642, DE-647425, GB-103295 oder US-4,632,067) ist es bekannt, die Menge des eingespritzten Wassers in Abhängigkeit des Drucks in der Ansaugleitung nach dem Kompressor geregelt werden. Dazu muss das Wasser vor dem Kompressor in die Ansaugluft gebracht werden. Es hat sich herausgestellt, dass vor allem bei grossen Leistungen Probleme auftreten, wenn Wassertröpfchen auf rotierende Teile des Kompressors auftreffen. Der mit hohen Geschwindigkeiten (bis zu 100'000 Umdrehungen pro Minute) rotierende Rotor des Kompressors kann durch Auftreffen von Wassertröpfchen beschädigt werden, was die Lebenszeit des Motors verringert.

Der vorliegenden Erfindung liegt deshalb die Aufgabe zugrunde, eine einfache Antriebseinrichtung anzugeben, die auch für Dieselmotoren geeignet ist und eine schnelle Anpassung der benötigten Menge an zerstäubendem Wasser bewirkt ohne durch Einspritzen von Wasser in die Ansaugluft den Rotor des Kompressors zu beschädigen. Eine weitere Aufgabe der vorliegenden Erfindung besteht darin, ein Verfahren anzugeben, welches eine wesentliche Verringerung der ausgestossenen Menge an Noₓ bei Dieselmotoren erlaubt.

Diese Aufgaben werden durch eine Antriebseinrichtung mit den Merkmalen des Anspruchs 1 und durch ein Verfahren zur Reduktion der Menge an NOₓ mit den Merkmalen des Patentanspruchs 7 gelöst.

Eine erfindungsgemässe Antriebseinrichtung weist einen Verbrennungsmotor und einen Turbolader auf, welcher einen Kompressor enthält. Der Kompressor saugt über eine Ansaugleitung Luft an, welche im Kompressor komprimiert wird und dem Lufteinlass des Verbrennungsmotors zugeführt wird. Die Antriebseinrichtung weist ausserdem einen Behälter auf, der Wasser enthält, welches in die Ansaugluft beigefügt werden kann. Der Druck des Wassers im Behälter wird durch den Druck in der Spülluftleitung zwischen dem Kompressor und dem Lufteinlass des Verbrennungsmotors bestimmt.

Da der Druck zwischen dem Kompressor und dem Lufteinlass von der Drehzahl des Kompressors, also von der Motorleistung (Motordrehzahl, Abgasdruck) abhängt, wird die Menge des beigefügten Wassers automatisch der Motorleistung angepasst. Der Wasserbehälter ist ausserdem über eine Wasserzufuhr mit der Ansaugleitung derart verbunden, dass das Wasser der Ansaugleitung vor dem Kompressor beigegeben werden kann. Das Wasser wird vor dem Beifügen in die Ansaugluft zerstäubt. Auf diese Weise wird das Risiko von Erosion und Korrosion im Motor verringert. Ausserdem ergibt sich eine homogenere Durchmischung von Luft und Wasser. Erfindungsgemäss wird eine Kombinationsdüse verwendet, welche das Wasser zerstäubt. Die Kombinationsdüse wird mit dem Druck über dem Wasser im Wasserbehälter beaufschlagt. Dies führt dazu, dass die Grösse der Wassertröpfchen welche durch die Kombinationsdüse erzeugt werden, vom Druck der Ansaugluft zwischen dem Kompressor und dem Lufteinlass, das heisst indirekt von der Motorleistung, abhängt. Je grösser die Motorleistung ist, umso grösser ist der Spülluftdruck und umso kleiner ist der Durchmesser der zerstäubten Wassertröpfchen. Darin liegt der besondere Vorteil der vorliegenden Erfindung. Je grösser die Motorleistung ist, umso schneller dreht der Rotor des Kompressors. Je schneller der Rotor des Kompressors dreht, umso kleiner sind also die eingespritzten Wassertröpfchen. Damit wird wird das Risiko einer Zerstörung des Rotors vermieden. Die zerstäubten Wassertröpfchen werden atomisiert, das heisst sie weisen typischerweise einen Durchmesser von 0,01 mm bis 0,1 mm auf. Wesentlich ist, dass die Grösse der Wassertröpfchen in Abhängigkeit der Motorleistung, bzw. in Abhängigkeit der Dimensionen des Motors gewählt wird. Kleine Wassertröpfchen sind aber nicht nur im Hinblick auf Beschädigungen des Rotors von Vorteil. Durch Versprühen des Wassers zu derart kleinen Tröpfchen wird die gesamte Tröpfchenoberfläche vergrössert, was den Verdampfungsvorgang erleichtert, bzw. beschleunigt. Kleine Wassertröpfchen haben ausserdem den Vorteil, dass sie dem Ansaugluftstrom besser folgen und dass ein Absetzen der Wassertröpfchen an den Wänden der Leitung für die Ansaugluft vermieden wird. Solch kleine Wassertröpfchen werden rasch verdampft, so dass die Verdampfung bereits während des Kompressionsvorgangs im Kompressor erfolgt. Die Ausgangstemperatur der Luft aus dem Kompressor wird dabei reduziert, was zu einem höheren thermodynamischen Wirkungsgrad führt.

Erfindungswesentlich ist also, dass der Durchmesser der Wassertröpfchen in Abhängigkeit der Motorleistung ausgewählt wird. Dies wird besonders einfach durch die Verwendung einer Kombinationsdüse erzielt, welche mit dem Druck (oder mit einem zu diesem Druck proportionalen, kleineren Druck) in der Ansaugluft nach dem Kompressor beaufschlagt wird. Als Kombinationsdüse werden bekannte Düsen, wie sie z.B. aus der Lufbefeuchtung bekannt sind, verwendet. Die Zerstäubung erfolgt unter gleichzeitiger Luftbeimengung unter Verwirbelung des zerstäubten Wassers im Kompressor.

Wenn das Wasser der Ansaugluft vor dem Kompressor beigefügt wird, reduziert sich der Temperaturanstieg der Luft durch den Kompressor aufgrund der Phasenumwandlungswärme und der höheren spezifischen Wärmekapazität von Wasser. Mit einem kleineren Temperaturanstieg lässt sich die Ansaugluft stärker komprimieren, was (aufgrund der grösseren Dichte des Arbeitsmediums) zu höheren Wirkungsgraden führt. Dabei hat es sich bewährt, einen Wassersprühnebel direkt in das Zentrum des Kompressors einzusprühen.

Die erfindungsgemässe Antriebseinrichtung weist eine Druckleitung auf, welche den Behälter mit dem Kompressor verbindet.

Die Druckluftleitung ist oberhalb des Wasserspiegels am Druckbehälter angeschlossen und führt parallel zur ersten wasserführenden Druckleitung zur Kombinationsdüse. Mit der Luft, die der Düse zugeführt wird, wird das Wasser versprüht, so dass die Gefahr von Beschädigungen des Kompressors durch Erosion verringert wird.

Besonders einfach kann der Druck im Wasser erzeugt werden, wenn der Wasserbehälter mit der Ansaugleitung zwischen dem Kompressor und dem Lufteinlass des Motors verbunden ist. Gegebenenfalls kann in diese Verbindungsleitung ausserdem ein Druckreduzierventil eingesetzt werden.

Es wäre aber auch denkbar, den Druck zwischen dem Kompressor und dem Lufteinlass des Motors mit einer Messanordnung zu messen und den Druck im Wasser mit einem Kolben zu erzeugen, der in Abhängigkeit des gemessenen Drucks zwischen Kompressor und Lufteinlass des Motors betätigt wird.

Das erfindungsgemässe Verfahren besteht darin, dass der Druck des zu der Ansaugluft beizufügenden Wassers vom Druck der komprimierten Ansaugluft bestimmt wird, wobei dieser Druck ausserdem zum Zerstäuben des Wassers in einer Kombinationsdüse verwendet wird.

Der Anteil an Wasser, der dem Treibstoff zugeführt wird, braucht selbstverständlich nicht über das ganze Leistungsspektrum des Motors konstant zu bleiben. So ist es beispielsweise denkbar, die Wasserzufuhr bei kleinen Belastungen, beispielsweise beim Anfahren oder beim Schalten zu unterbinden. Wesentlich ist einzig, dass ausreichend zerstäubtes Wasser vor dem Kompressor in die Ansaugleitung eingespritzt wird, damit der bei grossem Drehmoment erzeugte Druck über dem Kompressor verwendet werden kann, um das Wasser der Ansaugluft beizufügen und zu zerstäuben.

In einem weiteren, besonders bevorzugten Ausführungsbeispiel wird der Druck in der Ansaugleitung zwischen dem Kompressor und dem Lufteinlass des Motors über eine Druckleitung direkt in den Wasserbehälter geführt. Besonders günstig ist es, wenn das Ende der Druckleitung unterhalb des Wasserspiegels im Wasserbehälter mündet. Damit kann einerseits die heisse Luft abgekühlt werden, so dass Beschädigungen von nachfolgenden Rohrsystemen, welche aus Kunststoff bestehen können, vermieden werden. Ein weiterer Vorteil dieser Anordnung besteht darin, dass das Wasser im Wasserbehälter durch die warme Luft erwärmt wird, so dass ein Einfrieren in kalten Jahreszeiten vermieden wird.

Vorteilhaft kann dem Wasser auch ein Mittel zum Absenken des Gefrierpunktes, typischerweise Alkohol, zugefügt werden.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:

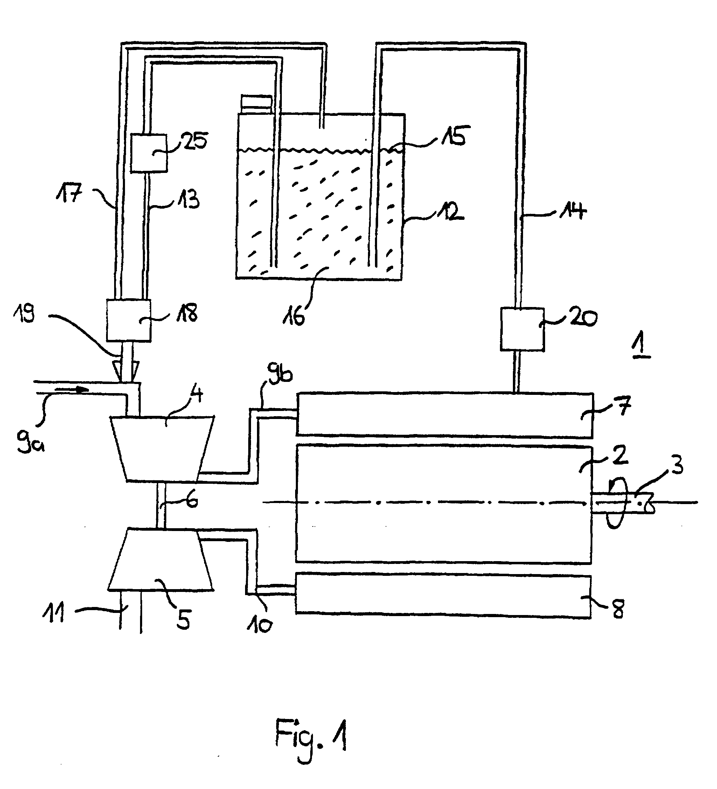

- Fig. 1: eine Antriebseinrichtung für einen Dieselmotor mit einem Druckbehälter.

In Figur 1 ist eine Antriebseinrichtung 1 mit einem Verbrennungsmotor 2 für Dieseltreibstoff (Dieselmotor) und eine an dieser angekoppelten Antriebswelle 3, einem Kompressor 4 für die Ansaugluft und einer Abgasturbine 5 gezeigt. Der Kompressor 4 ist über eine Welle 6 mit der Abgasturbine 5 verbunden und wird so von dieser angetrieben. Dem Dieselverbrennungsmotor 2 ist ein Ansaugluftverteiler 7 vorgeschaltet und eine Abgaskammer 8 nachgeschaltet. Die schematisch dargestellte Abgaskammer bildet die Verbindung zwischen dem Verbrennungsmotor und einer Abgasleitung. Der Kompressor 4 saugt über eine Ansaugleitung 9a Luft an und ist über eine Ansaugluftleitung 9b am Verteiler 7 angeschlossen. Die Abgaskammer 8 ist ihrerseits über eine Abgasleitung 10 an der Abgasturbine 5 angeschlossen, von welcher ein Auspuffrohr 11 ins Freie führt.

Ferner ist ein Druckbehälter 12 vorgesehen, der über eine erste wasserführende Druckleitung 13 und eine Kombinationsdüse 18 vor dem Eintritt des Kompressors 4 mit dem Kompressor 4 und über eine zweite Druckleitung 14 mit dem Verteiler 7 verbunden ist. Parallel zur ersten wasserführenden Druckleitung 13 ist eine Druckluftleitung 17 vorgesehen, die mit dieser zu der Kombinationsdüse 18 führt, welche über eine weitere Leitung 19 mit der Ansaugleitung vor dem Kompressor verbunden ist. Die Düse 18 dient zum Versprühen oder Zerstäuben des Wassers, so dass dieses als sehr kleine Wassertröpfchen in die Ansaugleitung 9a vor dem Kompressor 4 hineingespritzt wird. In Abhängigkeit des Druckes nach dem Kompressor beträgt die Tröpfchengrösse etwa 0,01 mm bis 0,1 mm. Die Konstruktion einer solchen Düse 18 ist fachtechnisch bekannt, wobei die Düsenöffnung den Mischungsgrad und die Grösse der Wassertröpfchen bestimmt. In der zweiten Druckleitung 14 kann ausserdem ein Druckreduzierventil 20 vorgesehen sein. Da zum Zersprühen des Wassers möglichst hohe Drücke vorteilhaft sind, wird im allgemeinen auf das Druckreduzierventil 20 verzichtet.

In die wasserführende Druckleitung 13 kann ausserdem ein druckabhängiges Ventil 25 eingesetzt werden, das sich erst bei Erreichen eines bestimmten Minimaldruckes öffnet. Damit wird erreicht, dass bei kleinen Leistungen (Leerlauf, Schalten) der Ansaugluft kein Wasser beigefügt wird. Bei kleinen Leistungen kann der Druckzuwachs über den Kompressor zu klein sein, um das Wasser zu verdampfen. Die zweite Druckleitung 14 mündet unterhalb des Wasserspiegels 15, so dass die heisse Luft aus der Ansaugleitung 9b abgekühlt und das Wasser 16 im Wasserbehälter erwärmt wird.

Die Funktionsweise der vorbeschriebenen Antriebseinrichtung ist nun folgendermassen:

Durch den Druck der ausströmenden Abgase wird die Abgasturbine 5 angetrieben und somit über die Welle 6 auch der Kompressor 4. Damit wird der Ladedruck im Verteiler 7 erreicht. Der Druck der derart komprimierten Ansaugluft wird nun in den Druckbehälter 12 weitergeleitet. Wenn die Leistung des Motors erhöht wird, vergrössert sich der erzeugte Ladedruck und der Luftdruck der im Druckbehälter 12 oberhalb des Wasserspiegels 15 befindlichen Luft wird erhöht. Dadurch wird mehr Wasser durch die erste Druckleitung 13 geführt, und mehr Wasser in kleineren Tröpfchen zerstäubt und in den Kompressor 4 hineingespritzt. Ausserdem erhöht sich der Druck der Luft, welche über die Leitung 17 der Düse 18 zugeführt wird. Dies führt zu einem verstärkten Zerstäuben des Wassers. Da der Ladedruck abhängig ist von der Menge des beim Antrieb verbrannten Dieseltreibstoffes, nimmt die Menge eingespritzten Wassers in Abhängigkeit der Treibstoffmenge zu und die Grösse der Wassertröpfchen nimmt in Abhängigkeit der Drehzahl des Rotors des Kompressors ab. Weil die komprimierte Ansaugluft eine Druckerhöhung im Druckbehälter 12 bewirkt, wird der Druck der oberhalb des Wassers befindlichen Luft erhöht, so dass eine grössere Zerstäubung des Wassers in der Düse 18 stattfindet.

## Patentansprüche

1. Antriebseinrichtung (1) mit einem Verbrennungsmotor (2) und einem Turbolader, enthaltend einen Kompressor (4), welcher über eine Ansaugleitung (9a) Luft ansaugt,
wobei die Antriebseinrichtung (1) einen Behälter (12) mit Wasser zum Beifügen in die Ansaugluft aufweist,
wobei die Antriebseinrichtung (1) Mittel (14, 13) zum Erzeugen eines Drucks im Wasser ausweist, der vom Druck in der Ansaugleitung (9b) zwischen dem Kompressor (4) und dem Ansaugluftverteiler (7) bestimmt wird,
und wobei der Behälter (12) mit einer Wasserzufuhr (13, 18, 19) zum Beifügen von Wasser in die Ansaugluft mit der Ansaugleitung (9a) vor dem Kompressor (4) verbunden ist, **dadurch gekennzeichnet, dass** in der Verbindungsleitung (19) zwischen der Ansaugleitung (9a) und dem Wasserbehälter (12) eine Kombinationsdüse (18) zum Versprühen des Wassers in die Ansaugleitung (9a) angebracht ist, wobei zum Beimengen von Luft und zum Zerstäuben des Wassers in der Kombinationsdüse (18) eine Druckluftleitung (17) oberhalb des Wasserspiegels (15) am Druckbehälter (12) angeschlossen ist, die parallel zur ersten wasserführenden Druckleitung (13) zu der Düse (18) führt.

2. Antriebseinrichtung nach Anspruch 1, **dadurch gekennzeichnet, dass** der Wasserbehälter (16) mit einer Druckleitung (14) mit dem Ansaugluftverteiler (7) verbunden ist.

3. Antriebseinrichtung nach Anspruch 2, **dadurch gekennzeichnet, dass** die Druckleitung (14) ein Druckreduzierventil (20) aufweist.

4. Antriebseinrichtung nach einem der Ansprüche 1 bis 3, **dadurch gekennzeichnet, dass** ein druckabhängiges Ventil (25) vorgesehen ist, welches bei einem vorbestimmbaren Wasserdruck die Wasserzufuhr (13, 18, 19) öffnet.

5. Antriebseinrichtung nach einem der Ansprüche 2 bis 4, **dadurch gekennzeichnet, dass** die Druckleitung (14) unterhalb des Wasserspiegels (15) im Wasserbehälter (12) mündet.

6. Verfahren zur Reduktion der Menge NOₓ in den Abgasen in einer Antriebseinrichtung (1) mit einem Verbrennungsmotor (2) und einem Turbolader, enthaltend einen Kompressor (4), welcher über eine Ansaugleitung (9a) Luft ansaugt und welcher die komprimierte Luft über eine Ansaugleitung (9b) in einen Ansaugluftverteiler (7) des Motors (2) leitet, wobei in die Ansaugleitung (9a) vor dem Kompressor (4) Wasser in die Ansaugluft eingespritzt wird und wobei der Druck des eingespritzten Wassers in Abhängigkeit vom Druck in dem Ansaugluftverteiler (7) bestimmt wird, **dadurch gekennzeichnet, dass** das Wasser mittels einer Kombinationsdüse (18) zerstäubt in die Ansaugluft eingespritzt wird, wobei das Wasser in der Kombinationsdüse (18) zum Zerstäuben des Wassers mit dem Druck des Ansaugluftverteilers beaufschlagt wird.

## Claims

1. A drive means (1) with a combustion motor (2) and with a turbo-charger, containing a compressor (4) which suctions air via an intake conduit (9a),
wherein the drive means (1) comprises a container (12) with water for adding into the intake air,
wherein the drive means (1) comprises means (14, 13) for producing a pressure in the water which is determined by the pressure in the intake conduit (9b) between the compressor (4) and the intake air manifold (7),
and wherein the container (12) with a water feed (13, 18, 19) for adding water into the intake air is connected to the intake conduit (9a) in front of the compressor (4), **characterised in that** in the connection conduit (19) between the intake conduit (9a) and the water container (12) there is incorporated a combination nozzle (18) for spraying the water into the intake conduit (9a), wherein for admixing air and for atomising the water in the combination nozzle (18) above the water level (15) on the pressure container (12) there is connected a pressurised air conduit (17) which leads parallel to the first water-leading pressure conduit (13) to the nozzle (18).

2. A drive means according to claim 1, **characterised in that** the water container (16) is connected with a pressure conduit (14) to the intake air manifold (7).

3. A drive means according to claim 2, **characterised in that** the pressure conduit (14) comprises a pressure-reduction valve (20).

4. A drive means according to one of the claims 1 to 3, **characterised in that** there is provided a pressure-dependent valve (25) which opens the water feed (13, 18, 19) at a predeterminable water pressure.

5. A drive means according to one of the claims 2 to 4, **characterised in that** the pressure conduit (14) opens into the water container (12) below the water level (15).

6. A method for the reduction of the quantity of NOₓ in the exhaust gases in a drive means (1) with a combustion motor (2) and a turbo-charger, containing a compressor (4) which via an intake conduit (9a) suctions air and which leads the compressed air via an intake conduit (9b) into an intake air manifold (7) of the motor (2), wherein into the intake conduit (9a) in front of the compressor (4) water is injected into the intake air and wherein the pressure of the injected water is determined in dependence of the pressure in the intake air manifold (7), **characterised in that** the water, atomised by way of a combination nozzle (18), is injected into the intake air, wherein the water in the combination nozzle (18) for atomising the water is impinged with the pressure of the intake air difffuser.

## Revendications

1. Dispositif d'entraînement (1) comprenant un moteur à combustion interne (2) et un turbocompresseur à suralimentation, contenant un compresseur (4) qui aspire de l'air par l'intermédiaire d'une conduite d'aspiration (9a),
étant précisé que le dispositif d'entraînement (1) comporte un récipient (12) avec de l'eau à ajouter à l'air d'aspiration,
que le dispositif d'entraînement (1) comporte des moyens (14, 13) pour produire dans l'eau une pression qui est définie par la pression régnant dans la conduite d'aspiration (9b) prévue entre le compresseur (4) et le distributeur d'air aspiré (7),
t que le récipient (12), en vue de l'adjonction d'eau dans l'air d'aspiration, est relié grâce à une amenée d'eau (13, 18, 19) à la conduite d'aspiration (9a) avant le compresseur (4),
**caractérisé en ce qu'**il est prévu, dans la conduite de liaison (19) située entre la conduite d'aspiration (9a) et le récipient d'eau (12), un injecteur combiné (18) pour pulvériser l'eau dans la conduite d'aspiration (9a), étant précisé que pour ajouter de l'air et pour pulvériser l'eau dans l'injecteur combiné (18), on relie au récipient sous pression (12), au-dessus du niveau d'eau (15), une conduite d'air comprimé (17) qui mène à l'injecteur (18), parallèlement à la première conduite de pression amenant l'eau (13).

2. Dispositif d'entraînement selon la revendication 1, **caractérisé en ce que** le récipient d'eau (16) est relié grâce à une conduite de pression (14) au distributeur d'air aspiré (7).

3. Dispositif d'entraînement selon la revendication 2, **caractérisé en ce que** la conduite de pression (14) comporte une soupape de réduction de pression (20).

4. Dispositif d'entraînement selon l'une des revendications 1 à 3, **caractérisé en ce qu'**il est prévu une soupape dépendante de la pression (25) qui ouvre l'amenée d'eau (13, 18, 19) en présence d'une pression d'eau apte à être prédéfinie.

5. Dispositif d'entraînement selon l'une des revendications 2 à 4, **caractérisé en ce que** la conduite de pression (14) débouche dans le récipient (12) au-dessous du niveau d'eau (15).

6. Procédé pour réduire la quantité de Noₓ dans les gaz d'échappement d'un dispositif d'entraînement (1) comprenant un moteur à combustion interne (2) et un turbocompresseur à suralimentation et contenant un compresseur (4) qui aspire de l'air par l'intermédiaire d'une conduite d'aspiration (9a) et qui amène l'air comprimé dans un distributeur d'air aspiré (7) du moteur (2) par l'intermédiaire d'une conduite d'aspiration (9b), étant précisé que de l'eau est injectée dans l'air d'aspiration, dans la conduite d'aspiration (9a), avant le compresseur (4) et que la pression de l'eau injectée est définie en fonction de la pression qui règne dans le distributeur d'air d'aspiration (7),
**caractérisé en ce que** l'eau est injectée dans l'air d'aspiration en étant pulvérisée à l'aide d'un injecteur combiné (18), l'eau étant contrainte par la pression du distributeur d'air d'aspiration, dans l'injecteur combiné (18) destiné à pulvériser l'eau.
